# EUROPEAN PATENT SPECIFICATION

(11) **EP 4 212 370 B1**
(45) Date of publication and mention of the grant of the patent: **02.07.2025**
(21) Application number: 23150515.7
(22) Date of filing: 05.01.2023
(51) Int. Cl.: B60J 5/10, B60R 5/04

(54) **VEHICLE TAILGATE ASSEMBLY AND VEHICLE**
FAHRZEUGHECKKLAPPENANORDNUNG UND FAHRZEUG
ENSEMBLE HAYON DE VÉHICULE ET VÉHICULE

(30) Priority: 14.01.2022 CN 202210047046
(43) Date of publication of application: 19.07.2023
(73) Proprietor: Stellantis Auto SAS, 78300 Poissy (FR)
(72) Inventor: SUN, M. NING, Shanghai, 200233 (CN); MA, M. JUNXUE, Shanghai, 200233 (CN)
(74) Representative: BCIP

(56) References cited:
- FR-A1- 2 364 787
- JP-U- S6 267 855
- KR-B1- 100 937 244

## Description

### TECHNICAL FIELD

The present disclosure relates to the field of vehicle parts, in particular to a vehicle tailgate assembly integrated with a shelf interface and a vehicle.

### BACKGROUND

A tailgate of a motor vehicle is rotatably attached to a rear side body of the vehicle through a hinge assembly so that the tailgate can move between an open position and a closed position. Usually, a shelf or a rear partition is arranged at the rear of the vehicle, which is used to place objects with small volume and/or weight, and plays an aesthetic role in shielding the objects in the vehicle when the tailgate is closed.

With the diversified demand of vehicle shape and function, more and more vehicles have adopted a manner of moving and opening the shelf and the tailgate at the same time when opening the tailgate to expand the storage space at the rear of the vehicle, which makes the configuration of the tailgate need to correspond to that of the shelf. Once the configuration of the shelf is changed or the strategy is changed without increasing the space, the configuration of the tailgate needs to be changed accordingly, resulting in an increased cost. From the prior art are known KR100937244B1, FR2364787A1 and JPS6267855.

### SUMMARY

The purpose of the present disclosure is to solve the above-mentioned problems in the prior art, and to propose a universal vehicle tailgate, which is suitable for different situations where the shelf moves along with the tailgate or does not need to move, so as to improve the universality and interchangeability of tooling and reduce the cost.

To this end, according to one aspect of the present disclosure, a vehicle tailgate assembly is provided. The vehicle tailgate assembly comprises a tailgate inner plate and at least one joint assembly arranged on the tailgate inner plate. The joint assembly comprises a first engaging component adapted to engage with a first parcel shelf to make the first parcel shelf move in response to the movement of the tailgate inner plate; and a second engaging component matched with the first engaging component and adapted to engage with a second parcel shelf. The first parcel shelf is different from the second parcel shelf.

By providing the joint assembly arranged on the tailgate inner plate, under the condition of adopting the first parcel shelf, the engagement between the first parcel shelf and the first engaging component can make the first parcel shelf move along with the movement of the tailgate inner plate, thus expanding the storage space. Under the condition of adopting the second parcel shelf, the second engaging component provides a buffer to the second parcel shelf when the tailgate inner plate is closed, thus avoiding the abnormal noise caused by collision or friction. When the tailgate inner plate is opened, the second engaging component matched with the first engaging component also effectively avoids the problem of affecting the appearance quality.

According to the above technical concept, the embodiments of the present disclosure may further include any one or more of the following alternative forms.

The tailgate inner plate comprises a connecting part adapted to be attached to the first parcel shelf, and the first engaging component is configured as at least one clamping groove formed on the connecting part, and the at least one clamping groove is matched with at least one clamping protrusion provided on the first parcel shelf. The first engaging component further comprises a socket arranged adjacent to the clamping groove so as to be matched with the second engaging component. and this second engaging component is configured as a plug-in comprising a plug-in part adapted to be inserted into the socket, and a wing part adapted to cover the clamping groove after being inserted into the socket.

In some alternative forms, the plug-in part is provided with a convex flange for tightly matching with the edge of the socket.

In some alternative forms, the second engaging component further comprises a buffer part opposite to the plug-in part, and the buffer part is adapted to engage with the second parcel shelf when the tailgate inner plate is closed.

In some alternative forms, the buffer part is configured as a hollow structure extending opposite to the plug-in part, so as to be deformed after engaging with the second parcel shelf.

In some alternative forms, the buffer part is configured as arched shaped comprising a pair of supporting portions extending from the wing parts and a contacting portion connected with the pair of supporting portions to be adapted to abut against the second parcel shelf, wherein the supporting portions are provided with reinforcing ribs.

In some alternative forms, the second engaging component is integrally formed by EPDM.

According to another aspect of the present disclosure, a vehicle is also provided. The vehicle comprises a vehicle tailgate assembly mentioned above.

The vehicle tailgate assembly provided by the present disclosure not only improves the applicability of the tailgate inner plate by integrating the joint assembly suitable for different shelves to save the cost, but also effectively avoids the problem of abnormal noise caused by friction or impact of different shelves during opening or closing the tailgate, thereby improving the NVH performance (noise, vibration and acoustic roughness performance) and service durability of the vehicle. The present disclosure has little change to the existing vehicle tailgate, and it can be widely applied to various types of vehicle tailgate with simple structure, quick assembly and easy implementation.

### BRIEF DESCRIPTION OF THE DRAWINGS

Other features and advantages of the present disclosure will be better understood from the following preferred embodiments described in detail in conjunction with the accompany drawings, in which:
Fig. 1A is a schematic view of a tailgate inner plate in a vehicle tailgate assembly according to an embodiment of the present disclosure ;
Fig. 1B is an enlarged schematic view of part A in Fig. 1A, showing a first engaging component ;
Fig. 1C is a schematic view of a second engaging component adapted to match with the first engaging component in Fig. 1B ;
Fig. 1D is a partial schematic view of the second engaging component after being matched with the first engaging component ;
Fig. 2A is a schematic view of an embodiment of a first parcel shelf ;
Fig. 2B is a partial schematic view of the engagement between the first parcel shelf of Fig. 2A and the tailgate inner plate ;
Fig. 2C is a partial schematic side view of the engagement between the first parcel shelf and the tailgate inner plate ;
Fig. 3A is a schematic view of an embodiment of a second parcel shelf ;
Fig. 3B is a partial schematic view of the engagement between the second parcel shelf of Fig. 3A and the tailgate inner plate ;
Fig. 3C is a partial schematic side view of the engagement between the second parcel shelf and the tailgate inner plate.

### DETAILED DESCRIPTION

The implementation and usage of the embodiments will be discussed in detail below. However, it should be understood that the specific embodiments discussed herein are merely illustrative of specific ways to implement and use the present disclosure without limiting the scope of the present disclosure. In the description for the structural positions of various components, representations of directions such as "upper", "lower", "top" and "bottom" are not absolute, but relative. When the various components are arranged as shown in the drawings, these representations of directions are appropriate. However, when the positions of the various components in the drawings are changed, these representations of directions are also changed accordingly.

Unless otherwise specified and limited, the terms "installation", "connection" and "attachment" should be understood broadly. For example, it can be fixed, detachable or integrated; it can be mechanically connected or electrically connected; it can be directly connected or indirectly connected through an intermediate medium, and it can be the internal communication of two elements or the interaction between two elements. For those skilled in the art, the specific meanings of the above terms in this disclosure can be understood according to specific situations.

Vehicle tailgate assembly usually includes tailgate outer plate, tailgate inner plate and reinforced metal sheets. For the trunk of most hatchbacks and SUVs, the tailgate with upturned structure is usually adopted. The opening and closing process of the tailgate plays an important role in luggage storage, decoration and parts maintenance. As far as the manufacturer is concerned, for the sake of cost-effectiveness, the vehicle products of the same production line are not expected to undergo substantial structural changes. However, for different configurations of the same vehicle model, or to meet the specific needs of some customers, the configuration of vehicle interior trim or interior part often needs to be changed. For example, in some configurations, it is expected that the parcel shelf will move synchronously with the opening and closing of the tailgate, so as to provide a larger shelf space when the tailgate is opened, while in other configurations, there is no need for the parcel shelf to move, which leads to the provision of different tailgates for different parcel shelf configurations, resulting in increased cost.

According to the concept of the present disclosure, the existing vehicle tailgate assembly, especially the tailgate inner plate, is improved, so that one kind of the tailgate inner plate can be applied to different parcel shelves. When the parcel shelf of vehicle product needs to be changed, the tailgate inner plate does not need to be replaced, thus reducing the tailgate cost and improving the interchange ability of tooling.

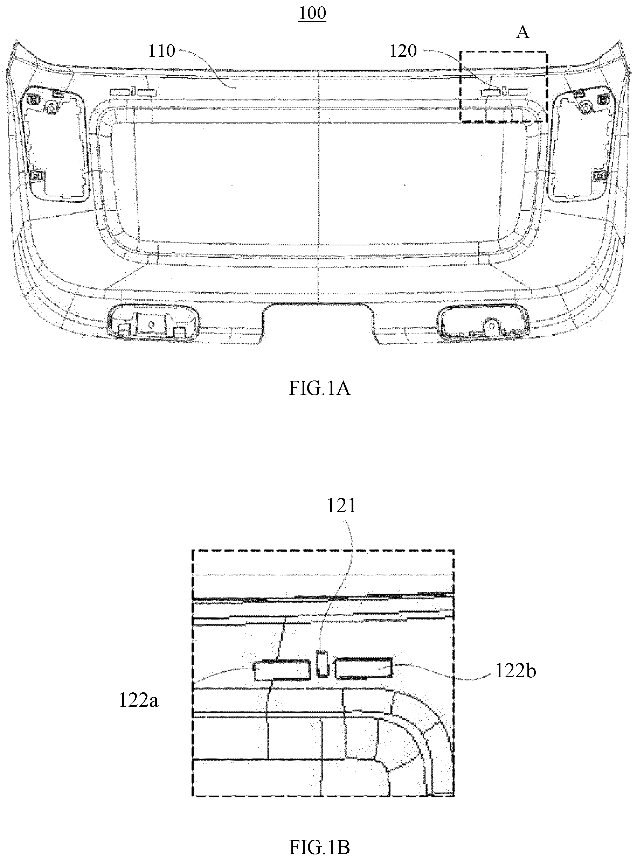

First, referring to Fig. 1A, a tailgate inner plate 100 according to one embodiment of the present disclosure is shown. The tailgate inner plate 100 includes a connecting part 110 adapted to be attached to a parcel shelf, and at least one joint assembly is provided on the connecting part 110 to adapt to different parcel shelves. Two joint assemblies located at two sides of the tailgate inner plate 100 are shown by way of example, and the joint assembly at one side is specifically illustrated and described below.

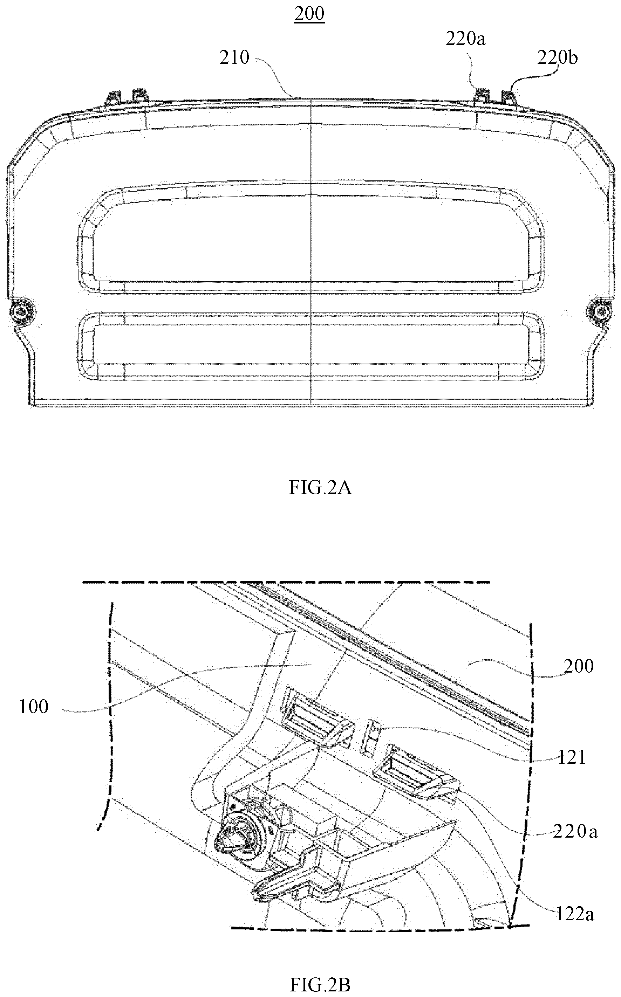

As shown in Fig. 1B and Fig. 2A, the joint assembly includes a first engaging component 120 and a second engaging component 130, wherein the first engaging component 120 is adapted to engage with the first parcel shelf 200 (Fig. 2A), so that the first parcel shelf 200 can move in response to the movement of the tailgate inner plate 100. That is, when the tailgate inner plate is opened, the first parcel shelf engaged with the tailgate inner plate moves synchronously to open, thus visually increasing the storage space. When the tailgate inner plate is closed, the first parcel shelf moves synchronously to close, and the objects inside of the vehicle cannot be seen from the rear window of the vehicle, thus meeting the appearance quality requirements.

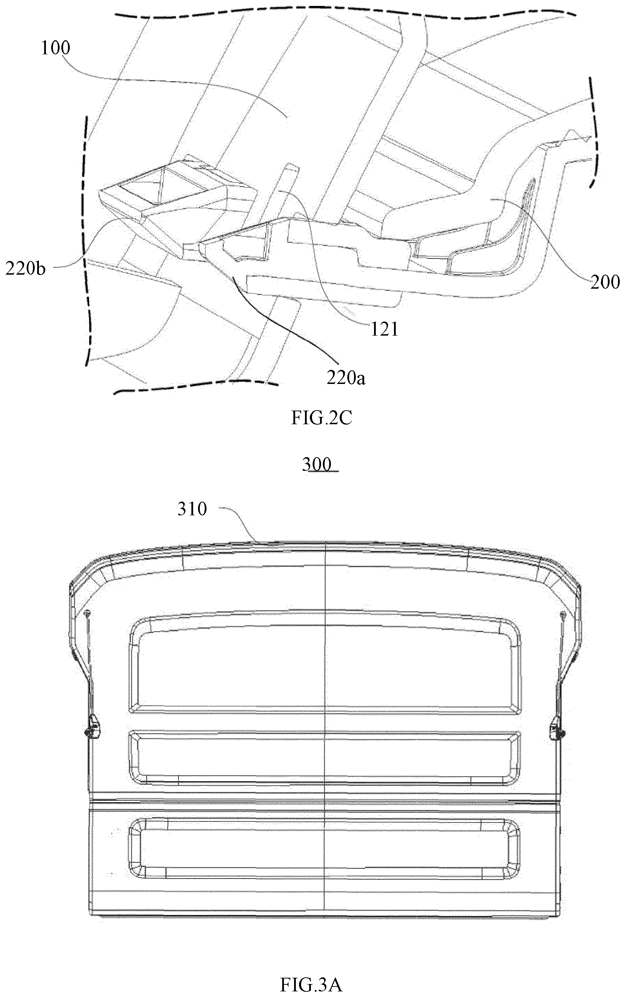

In the illustrated embodiment, the first engaging component 120 is configured as at least one clamping groove formed on the connecting part 110, and two clamping grooves 122a, 122b are exemplarily shown in the figure. Accordingly, the first parcel shelf 200 includes an attachment part 210 adapted to engage with the tailgate inner plate, and at least one clamping protrusion is provided on the attachment part 210. Two clamping protrusions 220a, 220b are shown in Fig. 2A for example to be respectively matched with the two clamping grooves 122a, 122b. It should be understood that, in some embodiments, the dimensions of the clamping groove and the clamping protrusion can be set to be tightly matched with each other, so that they are clamped and not easy to fall off after being engaged. Alternatively, the clamping protrusion is in the form of a buckle, so that the engagement can be realized after the buckle being inserted into the clamping groove. When the first parcel shelf 200 is engaged with the first engaging component 120, as shown in Figs. 2B and 2C, the two components can move together to realize synchronous opening and closing.

According to the present disclosure, the joint assembly further includes a second engaging component 130 to be adapted to engage with a second parcel shelf 300 which does not need to move with the tailgate. As shown in Fig. 3A, the difference from the above-mentioned first parcel shelf 200 is that the edge 310 of the second parcel shelf 300 has no structural features such as clamping protrusions. That is, the second parcel shelf 300 is a conventional shelf type. In this case, as shown in Figs. 1B to 1D, in some embodiments, the second engaging component 130 is configured as a plug-in, so that when the tailgate inner plate is used for the first parcel shelf 200, it is unnecessary to use the second engaging component 130, and when the second parcel shelf 300 is used, the second engaging component 130 only needs to be matched with the first engaging component 120 in a plug-in manner, so that the tailgate inner plate can be converted to be suitable for the second parcel shelf 300. Accordingly, the first engaging component 120 further includes a socket 121 disposed adjacent to the clamping groove.

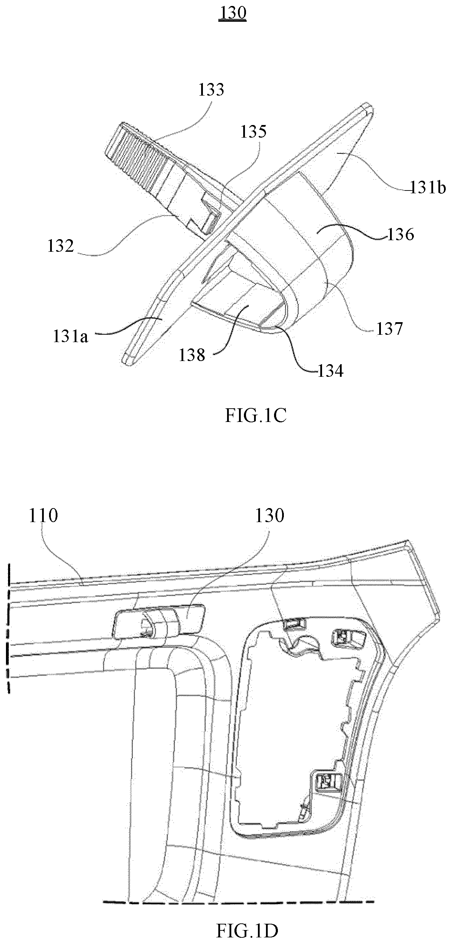

Referring specifically to Fig. 1C, in the illustrated embodiment, the second engaging component 130 includes a plug-in part 132 adapted to be inserted into the socket 121, and a wing part adapted to cover the clamping groove after being inserted into the socket 121. In this way, when the tailgate is opened, the second engaging component 130 covers the opening formed by the first engaging component 120, as shown in Fig. 1D, thereby avoiding perceived quality defects.

Advantageously, in the mode that the first engaging component 120 includes two clamping grooves 122a, 122b, the second engaging component 130 is provided with two wing parts 131a, 131b respectively covering the two clamping grooves 122a, 122b. Optionally, the socket 121 is arranged between the two clamping grooves 122a, 122b, and the plug-in part 132 is formed between the two wing parts 131a, 131b.

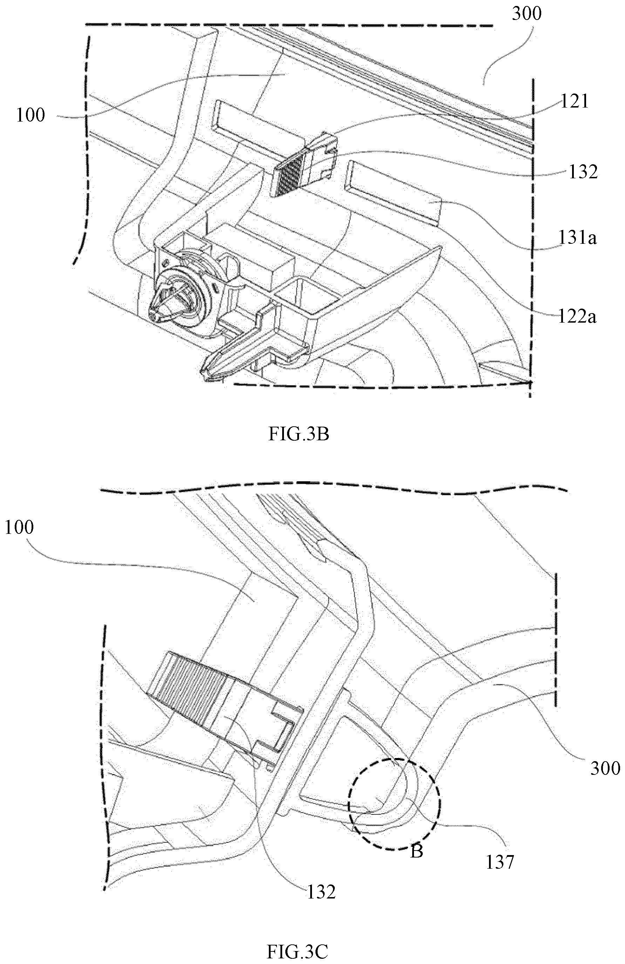

In some embodiments, the free end of the plug-in part 132 is formed with a stripe part 133 to facilitate the operator's grip when inserting into the socket. It should be understood that the stripe part can also be replaced by a bump, a concave hole or a grid or the like. In some embodiments, the plug-in part 132 is further provided with a convex flange 135 for tightly matching with the edge of the socket 121, so that the plug-in part 132 can be tightly engaged after being inserted into the socket 121, and can avoid falling off. In some embodiments, the plug-in part and the flange on it can be configured to be tapered towards the free end, as shown in Fig. 3B, which is also helpful for the insertion of the plug-in part and the tight engagement with the socket.

According to the present disclosure, the second engaging component 130 further includes a buffer part arranged opposite to the plug-in part 132. When the tailgate inner plate 100 is in the closed state, the buffer part is adapted to engage with the second parcel shelf 300 to reduce or eliminate the shaking of the parcel shelf during driving. In some embodiments, the buffer part is configured as a hollow structure extending opposite to the plug-in part, so as to be deformed after being engaged with the second parcel shelf. In the illustrated embodiment, the buffer part 134 is configured as an arched shape, and includes a pair of supporting portions 136 extending from the wing parts and a contacting portion 137 connected with the pair of supporting portions 136 and adapted to abut against the second parcel shelf 300. When the tailgate inner plate 100 is closed so that the second engaging component 130 contacts the second parcel shelf 300, the contacting portion 137 is easily deformed to provide buffering effect, as shown in part B of Fig. 3C. Optionally, the supporting portion 136 is provided with a reinforcing rib 138 to provide support strength when the contact portion 137 is deformed.

It should be understood that the second engaging component 130 can be made of any suitable material suitable for molding and deformation. Alternatively, the second engagement component can be integrally formed by ethylene propylene diene monomer (EPDM).

The vehicle tailgate assembly of the present disclosure is simple in structural design, easy to implement and has little change to the existing tailgate inner plate, which not only effectively solves the problem that tailgate tooling cannot be universally used, but also has low cost and is suitable for various types of vehicle tailgates.

Here, it should be understood that the embodiments shown in the figures only show the optional shapes, sizes and arrangements of various components of the vehicle tailgate assembly according to the present disclosure which are merely illustrative and not restrictive. Other shapes, sizes and arrangements can be adopted without departing from the spirit and scope of the present disclosure.

The technical contents and technical features of the present disclosure have been disclosed above. However, it can be understood that those skilled in the art can make various changes and improvements to the above disclosed concept, but all the changes and improvements fall within the scope of protection of the present disclosure. The description of the above embodiments is illustrative and not restrictive, and the scope of protection of the present disclosure is defined by the claims.

## Claims

1. A vehicle tailgate assembly comprising a tailgate inner plate (100) and at least one joint assembly arranged on the tailgate inner plate, the joint assembly comprising:a first engaging component (120) adapted to engage with a first parcel shelf to make the first parcel shelf (200) move in response to the movement of the tailgate inner plate; and a second engaging component (130) matched with the first engaging component and adapted to engage with a second parcel shelf (300), wherein the first parcel shelf is different from the second parcel shelf;a tailgate inner plate comprises a connecting part (110) adapted to be attached to the first parcel shelf, and the first engaging component is configured as at least one clamping groove (122a, 122b) formed on the connecting part, and wherein the at least one clamping groove is matched with at least one clamping protrusion (220a, 22b) provided on the first parcel shelf **characterized in that** the first engaging component further comprises a socket (121) arranged adjacent to the clamping groove (122a, 122b) so as to be matched with the second engaging component, wherein the second engaging component is configured as a plug-in comprising a plug-in part (132) adapted to be inserted into the socket (121), and a wing part (131a, 131b) adapted to cover the clamping groove (122a, 122b) after being inserted into the socket.

2. The vehicle tailgate assembly according to claim 1, wherein the plug-in part is provided with a convex flange for tightly matching with the edge of the socket.

3. The vehicle tailgate assembly according to claim 1, wherein the second engaging component further comprises a buffer part opposite to the plug-in part, and the buffer part is adapted to engage with the second parcel shelf when the tailgate inner plate is closed.

4. The vehicle tailgate assembly according to claim 3, wherein the buffer part is configured as a hollow structure extending opposite to the plug-in part, so as to be deformed after engaging with the second parcel shelf.

5. The vehicle tailgate assembly according to claim 4, wherein the buffer part is configured as arched shape comprising a pair of supporting portions extending from the wing parts and a contacting portion connected with the pair of supporting portions to be adapted to abut against the second parcel shelf, and wherein the supporting portions are provided with reinforcing ribs.

6. The vehicle tailgate assembly according to any one of claims 1 to 5, wherein the second engaging component is integrally formed by EPDM.

7. A vehicle comprising a vehicle tailgate assembly according to any one of claims 1 to 6.

## Patentansprüche

1. Eine Fahrzeugheckklappenanordnung, bestehend aus einer Heckklappeninnenplatte (100) und mindestens einer an der Heckklappeninnenplatte angeordneten Gelenkanordnung. Die Gelenkanordnung umfasst: ein erstes Eingriffselement (120), das mit einer ersten Gepäckraumabdeckung in Eingriff kommt, um die erste Gepäckraumabdeckung (200) in Reaktion auf die Bewegung der Heckklappeninnenplatte zu bewegen; und ein zweites Eingriffselement (130), das mit dem ersten Eingriffselement zusammenpasst und mit einer zweiten Gepäckraumabdeckung (300) in Eingriff kommt, wobei sich die erste Gepäckraumabdeckung von der zweiten Gepäckraumabdeckung unterscheidet; Eine Heckklappen-Innenplatte umfasst ein Verbindungsteil zur Befestigung an der ersten Gepäckraumabdeckung. Das erste Eingriffselement ist als mindestens eine am Verbindungsteil ausgebildete Klemmnut (122a, 122b) ausgebildet. Die Klemmnut ist mit mindestens einem Klemmvorsprung (220a, 22b) an der ersten Gepäckraumabdeckung korrespondierend. Das erste Eingriffselement umfasst ferner eine neben der Klemmnut (122a, 122b) angeordnete Aufnahme (121), die mit dem zweiten Eingriffselement korrespondiert. Das zweite Eingriffselement ist als Steckelement ausgebildet und umfasst ein in die Aufnahme (121) einsetzbares Steckteil (132) und ein Flügelteil (131a, 131b), das die Klemmnut (122a, 122b) nach dem Einstecken in die Aufnahme abdeckt.

2. Fahrzeugheckklappenanordnung nach Anspruch 1, wobei das Steckteil mit einem konvexen Flansch versehen ist, der eng am Rand der Aufnahme anliegt.

3. Fahrzeugheckklappenanordnung nach Anspruch 1, wobei die zweite Eingriffskomponente gegenüber dem Steckteil einen Pufferteil umfasst, der bei geschlossener Heckklappeninnenplatte mit der zweiten Gepäckraumablage in Eingriff tritt.

4. Fahrzeugheckklappenanordnung nach Anspruch 3, wobei der Pufferteil als Hohlkörper ausgebildet ist, der sich gegenüber dem Steckteil erstreckt und nach dem Eingriff mit der zweiten Gepäckraumablage verformt wird.

5. Fahrzeugheckklappenanordnung nach Anspruch 4, wobei der Pufferteil bogenförmig ausgebildet ist und ein Paar von Stützabschnitten umfasst, die von den Flügelteilen ausgehen, und einen mit dem Paar von Stützabschnitten verbundenen Kontaktabschnitt, der an der zweiten Gepäckraumablage anliegt. Die Stützabschnitte sind mit Verstärkungsrippen versehen.

6. Fahrzeugheckklappenanordnung nach einem der Ansprüche 1 bis 5, wobei das zweite Eingriffselement einstückig aus EPDM besteht.

7. Fahrzeug mit einer Fahrzeugheckklappenanordnung nach einem der Ansprüche 1 bis 6.

## Revendications

1. Ensemble de hayon de véhicule comprenant une plaque intérieure de hayon (100) et au moins un ensemble d'articulation disposé sur cette plaque. L'ensemble d'articulation comprend :
un premier élément d'engagement (120) conçu pour s'engager avec une première plage arrière afin de déplacer cette dernière (200) en réponse au mouvement de la plaque intérieure de hayon ; et
un second élément d'engagement (130) adapté au premier élément d'engagement et conçu pour s'engager avec une seconde plage arrière (300), la première plage arrière étant différente de la seconde plage arrière ; La plaque intérieure du hayon comprend une pièce de liaison destinée à être fixée à la première plage arrière. Le premier élément d'engagement est configuré comme au moins une rainure de serrage (122a, 122b) formée sur la pièce de liaison. Cette rainure de serrage est en correspondance avec au moins une saillie de serrage (220a, 22b) prévue sur la première plage arrière. Le premier élément d'engagement comprend également une douille (121) adjacente à la rainure de serrage (122a, 122b) de manière à s'adapter au second élément d'engagement.
Ce dernier est configuré comme un connecteur comprenant une partie enfichable (132) destinée à être insérée dans la douille (121) et une aile (131a, 131b) destinée à recouvrir la rainure de serrage (122a, 122b) après insertion.

2. Ensemble de hayon selon la revendication 1, dans lequel la partie enfichable est dotée d'une bride convexe pour un ajustement parfait avec le bord de la douille.

3. Ensemble de hayon selon la revendication 1, dans lequel le second élément d'engagement comprend en outre une partie tampon opposée à la partie enfichable, et cette partie tampon est conçue pour s'engager avec la seconde plage arrière lorsque la plaque intérieure du hayon est fermée.

4. Ensemble de hayon selon la revendication 3, dans lequel la partie tampon est configurée comme une structure creuse s'étendant à l'opposé de la partie enfichable, de manière à se déformer après engagement avec la seconde plage arrière.

5. Ensemble de hayon selon la revendication 4, dans lequel la partie tampon est configurée comme une forme arquée comprenant une paire de parties de support s'étendant depuis les ailes et une partie de contact reliée à la paire de parties de support pour venir en butée contre la seconde plage arrière, et dans lequel les parties de support sont dotées de nervures de renfort.

6. Ensemble hayon de véhicule selon l'une quelconque des revendications 1 à 5, dans lequel le second élément d'engagement est intégralement formé d'EPDM.

7. Véhicule comprenant un ensemble hayon de véhicule selon l'une quelconque des revendications 1 à 6.
